# EUROPEAN PATENT APPLICATION

(11) **EP 2 790 162 A1**
(43) Date of publication of application: **15.10.2014**
(21) Application number: 12856003.4
(22) Date of filing: 06.11.2012
(51) Int. Cl.: G07F 19/00, G06Q 40/00, G06Q 20/00

(54) **BUSINESS PROCESSING METHOD AND SYSTEM OF FINANCIAL SELF-SERVICE EQUIPMENT**

(30) Priority: 07.12.2011 CN 201110403729
(71) Applicant: GRG Banking Equipment Co., Ltd., Guangdong 510663 (CN)
(72) Inventor: LUO, Panfeng, Guangzhou Guangdong 510663 (CN); HAN, Zhenou, Guangzhou Guangdong 510663 (CN); HUO, Guojie, Guangzhou Guangdong 510663 (CN); WANG, Qinghua, Guangzhou Guangdong 510663 (CN)
(74) Representative: Maiwald Patentanwalts GmbH
(86) International application number: PCT/CN2012/084153
(87) International publication number: WO 2013/082986

(57) **Abstract**

Disclosed are a business processing method and system of financial self-service equipment; the processing method comprises the following steps: (1) an automatic teller terminal judging a business type of a client, carrying out one-time centralized processing on multiple businesses submitted by a certain user, combining businesses, which are logically associated and are in a certain processing order, into business sequences and sending the business sequences to a bank front-end system for processing; (2) the bank front-end system splitting a composite business sequence and submitting the businesses to a bank background business system for centralized processing one by one; (3) the bank front-end system collecting processing results of the businesses from the bank background business system one by one, returning the processing results to the automatic teller terminal through a format of a composite business sequence message, and displaying transaction results on a screen for the user to perform visualized account checking. The disclosed processing method saves the operating time of the user, and improves the operating efficiency of an automatic teller machine.

## Description

### RELATED APPLICATIONS

This application claims the priority of Chinese Patent Application No. 201110403729.X, entitled "FINANCIAL SELF-SERVICE DEVICE SERVICE PROCESSING METHOD AND SYSTEM", filed on December 7, 2011 with State Intellectual Property Office of PRC, which is hereby incorporated by reference in its entirety.

### FIELD OF THE INVENTION

This invention relates to the field of information processing technique, more particularly, relates to a financial self-service device service processing method and system.

### BACKGROUND OF THE INVENTION

In the service processing manner of the existing Automatic Teller Machine (ATM), only one service, such as query, withdraw, transfer and deposit, can be processed for one operation of a user, and an operation of another service may not be performed until the one service has been completed and a result is obtained. This technique consumes the resources of an ATM service transaction system, decreases the performance of a bank back-end service system and a bank front-end system, and wastes precious service time of the ATM and the operation time of the user. Furthermore, in this technique, a necessary flexibility for the user operation is lacked, operation steps of the user are complicated and a reconciliation effect of human-machine interaction is relatively poor.

For these reasons, an inventive application about a method of service processing method based on a complex service sequence batch processing technique has been proposed, but this method can be achieved only by altering the bank back-end service system. However, the alteration of the bank back-end service system has a high cost, relates to a wide range of techniques and has a big impact on the existing service mode.

### SUMMARY OF THE INVENTION

This invention provides a financial self-service device service processing method and system. This method achieves one-time batch processing of multiple services in a complex service sequence, and achieves one-time centralized processing, by an ATM terminal system, of multiple services submitted by a user. The complex service sequence is submitted to a bank front-end system by an ATM terminal, then the complex service sequence is divided into multiple services by the bank front-end system, then the multiple services are submitted one by one to a bank back-end service system, then the processing results for individual services are collected one by one, by the bank front-end system, and the processing results are returned at one time to the ATM terminal in a format of a complex service sequence message. Therefore, the services can be submitted at one time by the user of the ATM, and can be processed uniformly by the bank front-end system.

A financial self-service device service processing method, including:
(1) determining a type of a customer service; performing a one-time centralized processing of multiple services submitted by a user, combining the services which have a logical association relation and certain processing order into individual service sequences; and sending the service sequences to a bank front-end system for processing, by an automatic teller machine (ATM) terminal, the service sequences including a single service sequence and a complex service sequence;
(2) dividing the complex service sequence into multiple services, and submitting the services one by one to the bank back-end service system for centralized processing, by the bank front-end system;
(3) collecting one by one the processing results of the individual services from the bank back-end service system, and returning the processing results to the ATM terminal at one time in the format of a complex service sequence message, by the bank front-end system; and then displaying a transaction result on a screen such that the user can perform reconciliation intuitively.

Particularly, the method includes:
1) the ATM terminal is operated by the user, according to a service operation process, to perform setting and selection of a service;
2) if the user selects the complex service sequence, a complex service sequence message is generated according to service operation of the user, by the ATM terminal, and is sent to the bank front-end system;
3) the bank front-end system determines whether the message is the complex service sequence after receiving the message, the message is forwarded directly to the bank back-end service system for processing if the message is the single service sequence; and the complex service sequence is divided into multiple services if the message is the complex service sequence, to form a service sequence or a service queue which has order relation;
4) the bank front-end system sends the first service in the service sequence to the bank back-end service system and waits for a processing result of the service from the bank back-end service system;
5) the processing result is sent to the bank front-end system by the bank back-end service system;
6) the bank front-end system saves the returned processing result in a corresponding response field or region of the complex service sequence message, then submits a next service in the service sequence or the service queue to the bank back-end service system and gets back to the step 5) to continue processing until all the services in the service sequence or the service queue has been processed;
7) after all the services in the service sequence or the service queue has been processed, the bank front-end system packages the processing results for individual services into a complex service sequence response message, and sends the message to the ATM terminal at one time; and
8) the ATM terminal parses the complex service sequence response message, performs a corresponding hardware action to withdraw or deposit a bank note, and displays processing details information of the complex service sequence on a display in the order of the service sequence after finishing the hardware action, such that the user can use the information as a reference to perform reconciliation.

Furthermore, according to the actual condition of the service sequence, a way of combining the 8583 standard message and the complex service sequence message is employed, wherein the complex service sequence message is used for communication between the ATM terminal and the bank front-end system, and the existing 8583 standard message is used for communication between the bank front-end system and the bank back-end service system.

Furthermore, the complex service sequence message is generated, its format may be designed technically based on the format of the 8583 standard message, the designing method includes:
a) the property of a bank card account (e.g., an account number, a user password etc.) and the property of an ATM (e.g., an ATM number, a terminal type, a terminal device manufacturer etc.) are taken as common properties of all the services;
b) other properties of each service are taken as an inherent property of the service;
c) performing order of the services is taken as a property of the service sequence; and
d) the properties mentioned above are packaged to form various complex service sequence messages.

The invention further provides a financial self-service device service processing system, including:
an automatic teller machine (ATM) terminal adapted to determine a type of a customer service, perform a one-time centralized processing to the multiple services submitted by an user, combine the services which have a logical association relation and a certain processing order into individual service sequences, send the service sequences to the bank front-end system for processing; and receive a complex service sequence message sent by the bank front-end system and display transaction results on a display such that the user can perform reconciliation intuitively;
the bank front-end system adapted to divide a complex service sequence into multiple services and submitting one by one the multiple services to a bank back-end service system for centralized processing; and collect one by one the processing results of all services from the bank back-end service system and returning the results to the ATM terminal in the format of the complex service sequence message at one time, and
the bank back-end service system adapted to perform a centralized processing to the service sequence and return the processing results to the bank front-end system.

According to the actual conditions of an ATM communication network performance, the communication network between the ATM terminal system and the bank front-end system is a bottleneck of the ATM communication network performance, in view of this fact, the invention combines multiple times of service submission and processing between the ATM terminal system and the bank front-end system in the prior art into one complex service sequence, and summits and processes the complex service sequence at one time. Compared to the prior art, the invention decreases message transmission times between the ATM terminal and the bank front-end system, achieves batch service processing for the part of a self-service transaction system between a self-service terminal and the bank front-end system, and optimizes the performance of the self-service transaction system.

The ATM processing method of the invention achieves the one-time centralized processing for multiple services of the ATM, by altering the bank front-end system other than altering the bank back-end service processing system. It meets the user's operation requirements and intension by concentrating multiple separate services which have a logical association relation on user operation into one complex service sequence process, and returning and displaying multiple results at one time. Compared to the prior art, the invention saves the user's operation time, facilitates the reconciliation of account change by the user and improves the operation efficiency of the ATM. Furthermore, the mode of altering the bank front-end system other than altering the bank back-end service system is technically feasible, simple and reliable, and this mode has short alteration period, saves the updating cost of the self-service transaction and optimizes the software and hardware services for the part of the self-service transaction system between the self-service terminal and the bank front-end system.

### BRIEF DESCRIPTION OF THE DRAWINGS

Figure 1 is a flowchart of a finical self-service device service processing method provided according to an embodiment of the invention;
Figure 2 is a diagram of a basic principle for implementing one example of a "withdraw" service; and
Figure 3 is a diagram of a basic principle for implementing one example of a "deposit & transfer" complex service sequence.

### DETAILED DESCRIPTION OF THE INVENTION

For the clarity of the objects, technical solutions and advantages of the invention, the invention will be described in further detail in conjunction with the drawings.

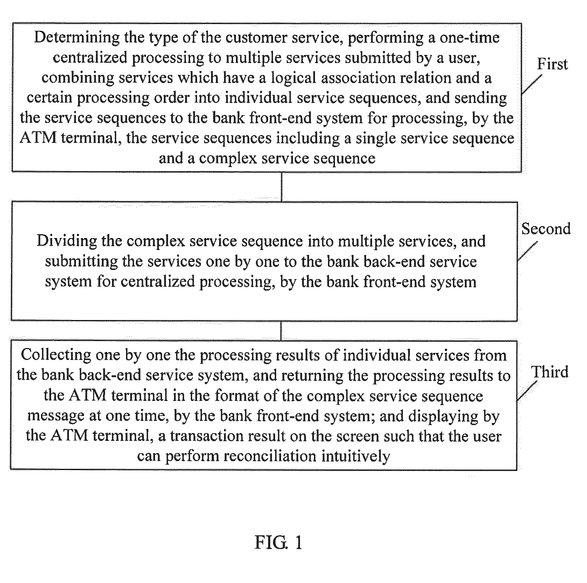

As shown in Figure 1, a finical self-service device service processing method includes the following steps:
(1) determining a type of a customer service; performing a one-time centralized processing on multiple services submitted by a user, combining the services which have a logical association relation and certain processing order into individual service sequences; and sending the service sequences to the bank front-end system, by an ATM terminal, the service sequences including a single service sequence and a complex service sequence;
(2) dividing the complex service sequence into multiple services, and submitting the services one by one to a bank back-end service system for centralized processing, by the bank front-end system; and
(3) collecting one by one the processing results of the individual services from the bank back-end service system, and returning the processing results to the ATM terminal at one time in the format of a complex service sequence message, by the bank front-end system; and then displaying, by the ATM terminal, a transaction result on a screen such that the user can perform reconciliation intuitively.

Particularly, the method includes the following steps:
1) the ATM terminal is operated by the user, according to a service operation process, to perform setting and selection of a service;
2) if the user selects the single service sequence, the service sequence is processed according to the prior art; and if the user selects the complex service sequence, a complex service sequence message is generated by the ATM terminal according to the user's service operation, and is sent to the bank front-end system;
3) the bank front-end system determines whether the message is the complex service sequence after receiving the message; if the message is the single service sequence, the message is forwarded directly by the front-end system to the bank back-end service system for processing and displaying a processing result by the ATM; and if the message is the complex service sequence, the complex service sequence is divided by the front-end system into multiple services to form a service sequence or a service queue which has order relation;
4) the bank front-end system sends the first service in the service sequence to the bank back-end service system and waits for a processing result of the service from the bank back-end service system;
5) the processing result is sent to the bank front-end system by the bank back-end service system;
6) the bank front-end system saves the returned processing result in a corresponding response field or a region of the complex service sequence message, then submits a next service in the service sequence or the service queue to the bank back-end service system and gets back to the step 5) to continue processing until all the services in the service sequence or the service queue have been processed;
7) after all the services in the service sequence or the service queue have been processed, the bank front-end system packages the processing results for individual services into a complex service sequence response message, and sends the message to the ATM terminal at one time; and
8) the ATM terminal parses the complex service sequence response message, performs a corresponding hardware action to withdraw or deposit a bank note, and displays processing details information of the complex service sequence on a display in the order of the service sequence after finishing the hardware action, such that the user can use the information as a reference to perform reconciliation.

In the ATM complex service sequence processing method mentioned above, the message format employed in communication is neither the same as the implementation that only adopts the 8583 standard message to achieve the communication from the ATM terminal to the bank front-end system, and then to the bank back-end service system, nor the same as the implementation that completely abandons the 8583 message and designs a complex service sequence message to achieve the communication from the ATM terminal to the bank front-end system, and then to the bank back-end service system. However, according to the actual conditions of the service sequence, the above method adopts an implementation combining 8583 message and complex service sequence message, wherein the complex service sequence message is employed between the ATM terminal and the bank front-end system and the existing 8583 standard message is employed between the bank front-end system and the back-end service system.

Furthermore, the complex service sequence message is generated, the format of the message may be designed technically based on the format of 8583 standard message, and the design method includes:
a) the property of a bank card account and the property of an ATM are taken as common properties of all the services;
b) other properties of a services are taken as inherent properties of the service;
c) performing order of the services is taken as a property of the service sequence; and
d) the properties mentioned above are packaged to form various complex service sequence messages.

| | | | | | |
|---|---|---|---|---|---|
| Complex service identifier | Common property | Service 1 property | Service 2 property | ··· | Service n property |

In the ATM complex service sequence processing method mentioned above, the complex service identifier indicates whether the message is a complex service message and using one bit to indicate it is ok. Wherein a message start identifier and a message end identifier are omitted.

In the ATM complex service sequence processing method mentioned above, a complete 8583 message of a service n may be constructed by the common property together with the properties of the service n, and accordingly, the services can be processed by the bank back-end service processing system.

In the ATM complex service sequence processing method mentioned above, the processing requirements on the complex service sequence by ATM are met through the technical solution of altering the existing bank front-end system, without altering the bank back-end service system. This is in consideration of the fact that altering the bank back-end service system in operation currently to achieve the complex service sequence costs too much and consumes much time.

In the ATM complex service sequence processing method mentioned above, for the message format used in a communication network process between the ATM and the bank front-end system, the original 8583 message is modified technically to allow that one message may include one service operation sequence rather than one service, the service operation sequence is provided to the bank back-end service system for operation and the results for all service operations in the service operation sequence are returned to the ATM through response message. In this way, at the beginning of operating the ATM by a user, the complex service sequence may be selected to operate, this is because that the bank front-end system is a processing by pure software which has no relation with the hardware operation of the related financial devices, and the software operation has low error rate and high execution efficiency. Therefore, the ATM may perform the complex service sequence at one time, for example, the "query & withdraw & query", "query & transfer & query", "query & deposit & query", and even more complicated service combination, such as "query & deposit & query & transfer & query". This not only saves the network communication resources but also saves the service operation time of a user, and the efficiency and performance of the ATM are improved. Meanwhile, a change in the book balance is viewed intuitively which facilitates the user.

In the ATM complex service sequence processing method mentioned above, the individual services in the complex service sequence have strict order relation, i.e., the complex service sequence is a service sequence not only a service set. The ATM terminal system shall perform the message packaging of the complex service sequence strictly according to the order of the individual services which are selected by the user. Similarly, the bank front-end system shall submit the individual services obtained by dividing the complex service sequence to the bank back-end service processing system for processing strictly in the performing order of the complex service sequence, and record the processing result for each service in sequence. The processing results are packaged according to the relation of the service sequence into a complex service sequence response message which is then returned to the ATM terminal.

In the ATM service processing method mentioned above, for the service operation which may cause a change in account fund, such as withdraw, deposit, and transfer, if the previous service and the following service of the current service are not the query services, the ATM terminal or the bank front-end system may insert query services for performing automatically before and after the current service, and return the results such that the user is facilitated to perform reconciliation.

According to the actual conditions of an ATM communication network performance, the communication network between the ATM terminal system and the bank front-end system is a bottleneck of the ATM communication network performance, in view of this fact, the invention combines multiple times of service submission and processing between the ATM terminal system and the bank front-end system in the prior art into one complex service sequence, and summits and processes the complex service sequence at one time. Compared to the prior art, the invention decreases message transmission times between the ATM terminal and the bank front-end system, achieves batch service processing for the part of a self-service transaction system between a self-service terminal and the bank front-end system, and optimizes the performance of the self-service transaction system.

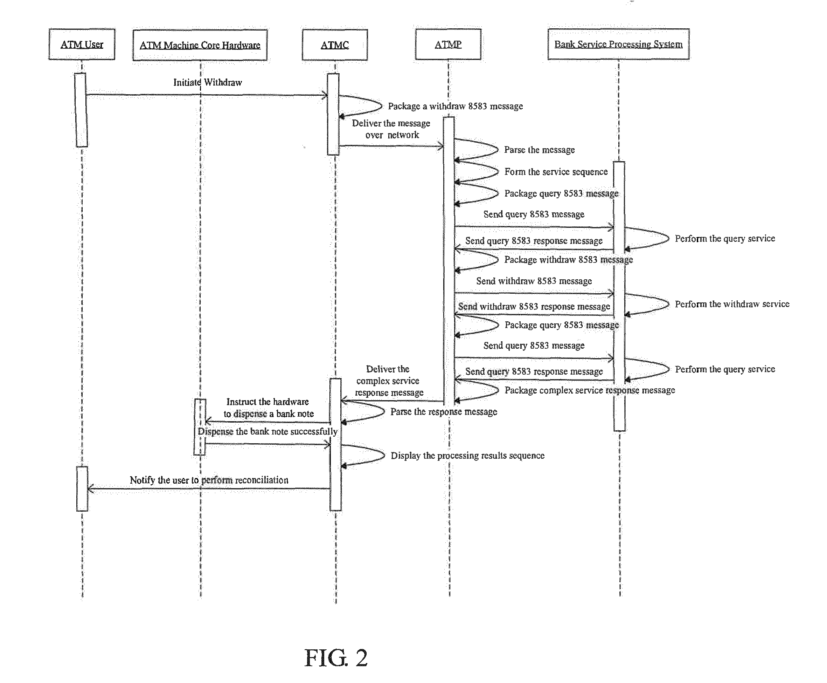

Figure 2 is a diagram of the basic principle for implementing one example of a withdraw service (only considering the case that the machine core dispenses cashes and the withdrawing is successful).

For the withdraw of the ATM customer, if the self-service transaction system wants to achieve the reconciliation desired by the customer, according to the prior art, the customer must perform the query operation for one time to obtain the account balance, then perform the withdraw operation to withdraw the needed money, and finally he is needed to perform a query operation for one time to obtain the account balance after the withdraw operation, therefore, the customer can know whether the change in the account balance is right for this withdraw service. Nevertheless, this only achieves indirect reconciliation for the customer, it is necessary for the customer to remember the processing result of the previous service, and the function of the immediate reconciliation which does not need the customer's intellection, such as remembering, can not be achieved.

According to conscious service processing method for the complex service sequence provided by the invention, the customer needs to perform only the withdraw service, and can obtain the change in the account balance for checking whether the account balance is right by performing the operation for only one time. Thereby the account balance of this service operation is determined, and the immediate reconciliation for change of the account can be performed intuitively. Particularly, the method includes the following steps.
1) The ATM user inserts a bank card, inputs a right password, inputs the amount of the money to be withdrawn, and initiates a withdraw service processing request to the ATM terminal system.
2) The ATM terminal performs message packaging using the withdraw service in the prior art, or a "query & withdraw & query" complex service sequence extended according to the invention, and sends the message to the bank front-end system.

| | | | | | |
|---|---|---|---|---|---|
| Complex service identifier | Common property | Service 1 property | Service 2 property | ... | Service n property |

Compared to the existing 8583 query message, the information not presented in the query property of this message, such as information on bank card account property (e.g., account number, user password etc.), information on ATM (ATM number, terminal type, terminal device manufacturer etc.), magnetic card information, and user password information, etc, all can be found in the common property.
3) The bank front-end system accepts the self-service terminal service request, and parses the message. If the parsed message is a single withdraw service, because the withdrawing will cause a change in the account fund, the bank front-end system will actively insert two query services respectively before and after the withdraw, such that "query & withdraw & query" service sequence is generated by the bank front-end system. If the parsed message is a "query & withdraw & query" complex service sequence, the bank front-end system will generate directly the "query & withdraw & query" service sequence, and the structure of the complex service sequence is shown in the step 2).
4) The bank front-end system divides and packages the "query & withdraw & query" service sequence into three separate services, i.e., query, withdraw and query. The dividing method is: the fact that the complex service identifier being 1 means that the message is a complex service message, the service sequence thereof is the sorting sequence of the individual service properties after the common property, one portion of the 8583 messages for the individual services is from the common property, and the other portion is from the service property. Therefore, the bank front-end system may divide one complex service sequence into a series of sequential services, and form a service queue of an 8583 message according to the order relation of the services in the complex service sequence.
5) Firstly, the bank front-end system sends a query service request to the bank back-end service system in the order of the service sequence, and the bank back-end service system sends a query response message to the bank front-end system after the service has been processed. If it fails to perform the service, the performing of the entire complex service sequence is failed, failure information is sent to the ATM terminal system, and the performing of the complex service sequence is ended. Otherwise, the bank front-end system stores temporarily the result of the query.
6) Secondly, the bank front-end system sends a withdraw service to the bank-end service system in the order of the service sequence, and the bank back-end service system sends a withdraw response message to the bank front-end system after the service has been processed. If it fails to perform the service, the performing of the entire complex service sequence is failed, failure information is sent to the ATM terminal system, and the performing of the complex service sequence is ended. Otherwise, the bank front-end stores temporarily the result of the withdraw service.
7) Finally, the bank front-end system sends a query service to the bank-end service system in the order of the service sequence, and the bank back-end service system sends a query response message to the bank front-end system after the service has been processed. If it fails to perform the service, the performing of the entire complex service sequence is failed, failure information is sent to the ATM terminal system, and the performing of the complex service sequence is ended. Otherwise, the bank front-end system stores temporarily the result of the query.
8) The bank front-end system packages the results of three services of the query, the withdraw and query service mentioned above into a complex service sequence response message, and sends the complex service sequence response message to the ATM terminal system.
9) The ATM terminal system receives and parses the complex service sequence response message. If the parsed withdraw service is performed successfully, the machine core is initiated to dispense a bank note, and a performing result sequence is displayed after the bank note is dispensed.
If the machine core fails to dispense a bank note, e.g., the bank note is jammed, a reversal service is initiated and a reversal message is sent to the bank front-end system, by the ATM terminal system. Then the message is parsed by the bank front-end system, because the reversal will cause a change in account fund, the reversal service is divided into three services "query & reversal & query" by the bank front-end system, similar to the steps 5), 6) and 7), the three services are sent in sequence to the bank back-end service system for processing, and the service processing results are packaged into the complex service response message and sent to the ATM terminal system.
10) The ATM terminal parses the response message and displays its performing results sequence at one time. So far, the user can see the entire particular conditions and processes of the change in the account balance at one time.

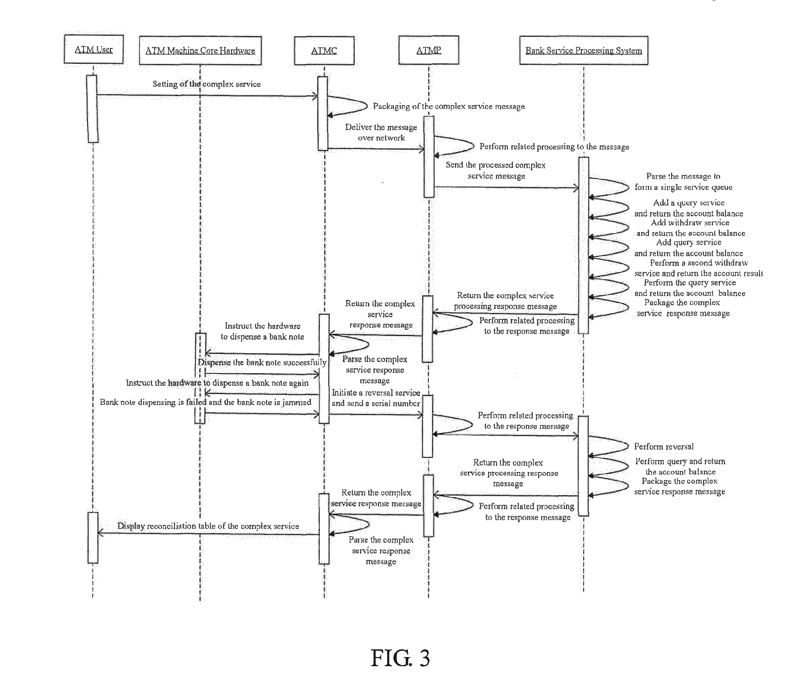

Figure 3 is a diagram of the basic principle of implementing one example of "deposit & transfer" complex service sequence.

In many cases, the user needs to deposit money to an account at first, thereafter performs a transfer operation, and the customer hopes to know clearly the change in the account for determining whether the change in the account is correct. According to the prior art, the customer needs to perform five services of query, deposit, query, transfer, and query at one time, and remember the performing results for the five services to perform reconciliation of the account, therefore, this operation is trivial.

The customer is only needed to perform only one time "deposit & transfer" complex service sequence by adopting the complex service sequence processing method of the invention, and a clear bill can be obtained.

Figure 3 illustrates the particular steps of implementing one example of one "deposit & transfer" complex service sequence.
1) An ATM user inserts a bank card, inputs a correct password, selects a deposit service, and places a bank note into the ATM; then the bank note is counted by the machine core and is delivered onto a temporary storage of the machine core; and the user acknowledges the result of counting the bank note. Furthermore, the user can place a bank note into the ATM for many times, then the machine core counts the bank notes and the user acknowledges the result by the counting of the bank notes.
2) After acknowledging the deposit, the user performs the setting of the next service, selects a transfer, inputs a transfer account, and acknowledges the transfer account; initiates a "deposit & transfer" complex service sequence.
3) The ATM control software controls the ATM terminal system to obtain information, packages a "deposit & transfer" complex service sequence message, and sends the message to the bank front-end system.

| | | | |
|---|---|---|---|
| Identifier 1 | Common property | Deposit property | Transfer property |

4) The bank front-end system parses the message after receiving the message, divides the message into a "deposit & transfer" service sequence, and analyzes the complex service sequence. If the user needs the function of reconciliation while there is no query service before and after the deposit and transfer service, the service sequence is transformed into five services including query, deposit, query, transfer and query.

| | | | | | | |
|---|---|---|---|---|---|---|
| Identifier 1 | Common property | Query property | Deposit property | Query property | Transfer property | Query property |

5) Firstly, the bank front-end system sends a query request to bank back-end service system to perform one query service according to the order specified by the service sequence, and obtains the performing results of the bank back-end service system. If it fails to perform the service, the performing of the entire complex service sequence is failed, failure information is sent to the ATM terminal system, and the performing of the complex service sequence is ended. Otherwise, the result of the query is stored temporarily.
6) Secondly, the bank front-end system sends a deposit request to bank back-end service system to perform one deposit service according to the order specified by the service sequence, and obtains the performing results of the bank back-end service system. If it fails to perform the service, the performing of the entire complex service sequence is failed, failure information is sent to the ATM terminal system, and the performing of the complex service sequence is ended, otherwise, the result of the deposit is stored temporarily.
7) the bank front-end system sends again a query request to the bank back-end service system to perform one query service according to the order specified by the service sequence, and obtains the performing results of the bank back-end service system. If it fails to perform the service, to the performing of the entire complex service sequence is failed, failure information is sent to the ATM terminal system, and the performing of the complex service sequence is ended, otherwise, the result of the query is stored temporarily.
8) Then, the bank front-end system sends a transfer service request to the bank back-end service system to perform a transfer service according to the order specified by the service sequence, and obtains the performing result of the bank back-end service system. If it fails to perform the service, the performing of the entire complex service sequence is failed, failure information is sent to the ATM terminal system, and the performing of the complex service sequence is ended, otherwise, the result of the query is stored temporarily.
9) Finally, the bank front-end system sends a query request to the bank back-end service system according to the order specified by the service sequence, and obtains the performing result of of the bank back-end service system. If it fails to perform the service, to the performing of the entire complex service sequence is failed, failure information is sent to the ATM terminal system, and the performing of the complex service sequence is ended, otherwise, the result of the query is stored temporarily.
10) The bank front-end system packages the performing results of the five services into a complex service sequence response message, and sends the complex service sequence response message to the ATM control software/ATM terminal system.
11) The ATM terminal system receives and parses the response message; if the parsed deposit service is successfully performed, the machine core is initiated to place the bank note into a bank-note box from the temporary storage, and otherwise, the bank note are returned to the user.
12) Then, the processing sequence response results and the detail of the change in the account balance of the entire complex service sequence "query & deposit & query & transfer & query" are displayed on a display, such that the user is facilitated to perform the reconciliation. So far, the processing of the complex service sequence has been finished.

The invention further provides a financial self-service device service processing system, including:
an ATM terminal adapted to determine a type of a customer service, perform a one-time centralized processing on multiple services submitted by an user, combine the services which have a logical association relation and a processing order into individual service sequences, send the service sequences to the bank front-end system for processing; and receive a complex service sequence message sent by the bank front-end system and display transaction results on a display such that the user can perform reconciliation intuitively;
the bank front-end system adapted to divide a complex service sequence into multiple services and submit one by one the multiple services to a bank back-end service system for a centralized processing; and collect one by one the processing results of the individual services from the bank back-end service system, and return the results to the ATM terminal in the format of the complex service sequence message at one time, and
the bank back-end service system adapted to perform a centralized processing on the service sequence and returning the processing results to the bank front-end system.

## Claims

1. A financial self-service device service processing method, comprising:
(1) determining a type of a customer service, performing a one-time centralized processing on a plurality of services submitted by a user, combining the services which have a logical association relation and a certain processing order into individual service sequences, and sending the service sequences to a bank front-end system for processing, by an automatic teller machine (ATM) terminal, the service sequences comprising a single service sequence and a complex service sequence;
(2) dividing the complex service sequence into a plurality of services, and submitting the services one by one to a bank back-end service system for centralized processing, by the bank front-end system; and
(3) collecting processing results of the individual services from the bank back-end service system one by one, and returning the processing results to the ATM terminal at one time in the format of a complex service sequence message, by the bank front-end system, and displaying, by the ATM terminal, a transaction result on a screen such that the user can perform reconciliation intuitively.

2. The financial self-service device service processing method of claim 1, specifically comprising:
1) operating the ATM terminal according to a service operation process to perform the setting and selection of the services, by the user;
2) generating a complex service sequence message according to service operation of the user, and sending the complex service sequence message to the bank front-end system, by the ATM terminal, when the user selects the complex service sequence;
3) determining whether the message is the complex service sequence after receiving the message, and dividing the complex service sequence into a plurality of services when the message is the complex service sequence, to form a service sequence or a service queue which has order relation, by the bank front-end system;
4) sending a first service in the service sequence to the bank back-end service system, and waiting for a processing result of the first service from the bank back-end service system, by the bank front-end system;
5) sending the processing result to the bank front-end system, by the bank back-end service system;
6) saving the processing result in a corresponding response field or region of the complex service sequence message, submitting a next service in the service sequence or the service queue to the bank back-end service system, and getting back to the step 5) to proceed until all services in the service sequence or the service queue have been processed, by the bank front-end system;
7) packaging the processing results for the individual services into a complex service sequence response message, and sending the complex service sequence response message to the ATM terminal at one time, by the bank front-end system, after all services in the service sequence or the service queue have been processed; and
8) parsing the complex service sequence response message, then performing corresponding hardware action to withdraw or deposit a bank note, and displaying performing detail information of the complex service sequence in the order of the service sequence on a display after operations of a hardware, by the ATM terminal, such that the user can perform reconciliation.

3. The financial self-service device service processing method of claim 1 or 2, wherein a way of combining 8583 standard message and the complex service sequence message is employed, wherein the complex service sequence message is adopted in communication between the ATM terminal and the bank front-end system, and the existing 8583 message is adopted in communication between the bank front-end system and the bank back-end service system, according to actual conditions of the service sequence.

4. The financial self-service device service processing method of claim 1, wherein the complex service sequence message is generated, the format of the complex service sequence message can be designed based on the format of the 8583 message, and the designing method comprises:
a) taking a bank card account property and an ATM property as common properties of all services;
b) taking other properties of each service as an inherent property of the service;
c) taking performing order of the services as a property of the service sequence; and
d) packaging the above properties to form various complex service sequence messages.

5. A financial self-service device service processing system, comprising:
an automatic teller machine (ATM) terminal configured to determine a type of a customer service, perform a one-time centralized processing on a plurality of services submitted by a user, combine the services which have a logical association relation and a certain processing order into individual service sequences, sending the service sequences to a bank front-end system for processing, receive a complex service sequence message sent by a bank front-end system, and display a transaction result on a screen such that the user can perform reconciliation intuitively;
the bank front-end system configured to divide the complex service sequence into a plurality of services, submit the services one by one to a bank back-end service system for centralized processing, collect processing results of the individual services from the bank back-end service system one by one, and return the processing results to the ATM terminal in the format of a complex service sequence message at one time; and
the bank back-end service system configured to perform a centralized processing to the service sequence, and returning the processing results to the bank front-end system.
